# EUROPEAN PATENT SPECIFICATION

(11) **EP 2 664 533 B1**
(45) Date of publication and mention of the grant of the patent: **07.01.2015**
(21) Application number: 13167677.7
(22) Date of filing: 14.05.2013
(51) Int. Cl.: B62L 5/00, B62M 6/45, B62M 6/55, G01L 3/10

(54) **Reverse brake mechanism for electrically assisted bicycle**
Durch rückwärtspedallieren betätigbarer Bremsmechanismus für Fahrräder mit elektrischen Hilfsantrieb
Mécanisme de frein actionné par rétropédalage pour bicyclette à assistance électrique

(30) Priority: 14.05.2012 TW 101117089
(43) Date of publication of application: 20.11.2013
(73) Proprietor: J.D Components Co., Ltd., Shou Shui Hsiang, Chang Hua Hsien (TW)
(72) Inventor: Chuo, Chiang-Che, 406 Taichung City (TW); Wu, Mei-Hao, 235 New Taipei City (TW)
(74) Representative: Becker Kurig Straus

(56) References cited:
- EP-A1- 2 384 962
- EP-A2- 2 380 806
- DE-A1-102010 028 645
- DE-U1-202009 014 577
- US-A- 5 900 703

## Description

### BACKGROUND OF THE INVENTION

### 1. Field of the Invention

The present invention relates to an electrically assisted bicycle and more particularly, to a reverse brake mechanism for an electrically assisted bicycle.

### 2. Description of the Related Art

When a person rides a bicycle, the bicycle rider normally pedals the pedals with the legs to rotate the crankshaft forward, causing the crankshaft to rotate the chainwheel. At this time, the chainwheel causes the chain to rotate the rear wheel of the bicycle, driving the bicycle to run forward.

When the bicycle rider wishes to stop the bicycle, the bicycle rider normally will pull the brake lever to drive the rear caliper, thereby stopping the rear wheel. However, to some bicycle riders, for example, children or the elderly, who have a lower than average grip strength, the conventional brake designs may be unable to achieve the expected effects, potentially increasing the risk of riding. Therefore, reverse brake designs are created to generate a braking effect upon reverse pedaling of the pedals. For example, US4,261,449 "Bicycle pedal actuated brake control and release system" and US5,810,139 "Bicycle and a friction device for controlling a clamping roller coupling of a bicycle hub of a bicycle" provide means to link a brake mechanism in the wheel hub to the chain during a reverse rotation of the cranks of the pedals, causing the brake mechanism to brake the rear wheel. However, these designs are to be used in regular bicycles, not applicable to electrically assisted bicycles.

US5,900,703 introduces a motor control system of electrical-motorized bicycle which prevents the motor from applying a forward torque to the bicycle wheel when the pedals are rotated in a reverse direction to enhance the operational safety of the motorized bicycle. A ring of magnets is disposed about the crank axle and two sensors are used to detect the rotational speed and direction of the magnet and thus generating a signal for controlling the operation of an electrical motor.

EP2380806 discloses a reverse brake mechanism according to the preamble of claim 1, and the reverse brake mechanism further has a switch for decoupling the assisting electric motor from the power transmission means when no driving force is transmitted by human power.Therefore, the inventor of the present invention creates a center mounted driving mechanism having a reverse pedal brake function for electrically assisted bicycle.

### SUMMARY OF THE INVENTION

The present invention has been accomplished under the circumstances in view. It is the main object of the present to provide a reverse brake mechanism for electrically assisted bicycle, which generates a time lag at the time the pedals are pedaled reversely, forming a time difference for allowing interruption of the output of the assisted power of the motor.

To achieve this and other objects of the present invention, a reverse brake mechanism for electrically assisted bicycle in accordance with the present invention comprises a motor, a chainwheel, a crankshaft, a drive ring, two magnetic devices, and two magnetic sensors. The chainwheel comprises a socket coupled to the motor for one-way rotation and rotatable by the motor in the forward direction. The crankshaft is rotatably inserted through the socket of the chainwheel. The drive ring is fixedly mounted around the crankshaft and coupled to the socket of the chainwheel. Thus, the drive ring can be driven by the crankshaft to rotate the socket. Each magnetic device comprises a magnet holder and a magnet. The two magnet holders are respectively fixedly mounted at the socket of the chainwheel and the drive ring so that the two magnet holders can be respectively driven by the socket of the chainwheel and the drive ring to rotate synchronously or relative to each other. The magnets are respectively mounted in the two magnet holders corresponding to each other so that the magnets at the two magnet holders can be kept in a polar misalignment condition when the two magnet holders are rotated relative to each other. The magnetic sensors are electrically connected to the motor and disposed facing toward the magnets of the respective magnetic devices for sensing a polar misalignment between the magnets at the magnetic devices and interrupting the output of the assisted power of the motor. Thus, when the output of the assisted power of the motor is interrupted, the drive ring is continuously rotated with the crankshaft to reverse the chainwheel, achieving a braking effect.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a perspective view of a reverse brake mechanism for an electrically assisted bicycle in accordance with the present invention;
FIG. 2 is a perspective view of a part of the reverse brake mechanism for an electrically assisted bicycle in accordance with the present invention;
FIG. 3 is an exploded view of the part of the reverse brake mechanism for an electrically assisted bicycle shown in FIG. 2;
FIG. 4 is a sectional view of the present invention, illustrating the drive ring driven by the crankshaft and the socket rotated forward with the drive ring;
FIG. 5 is a top view of a part of the present invention, illustrating the magnets of the two magnetic devices in polar alignment;
FIG. 6 is similar to FIG. 4, illustrating the drive ring rotated backward, the protruding blocks of the drive ring kept part from the mounting grooves of the socket.

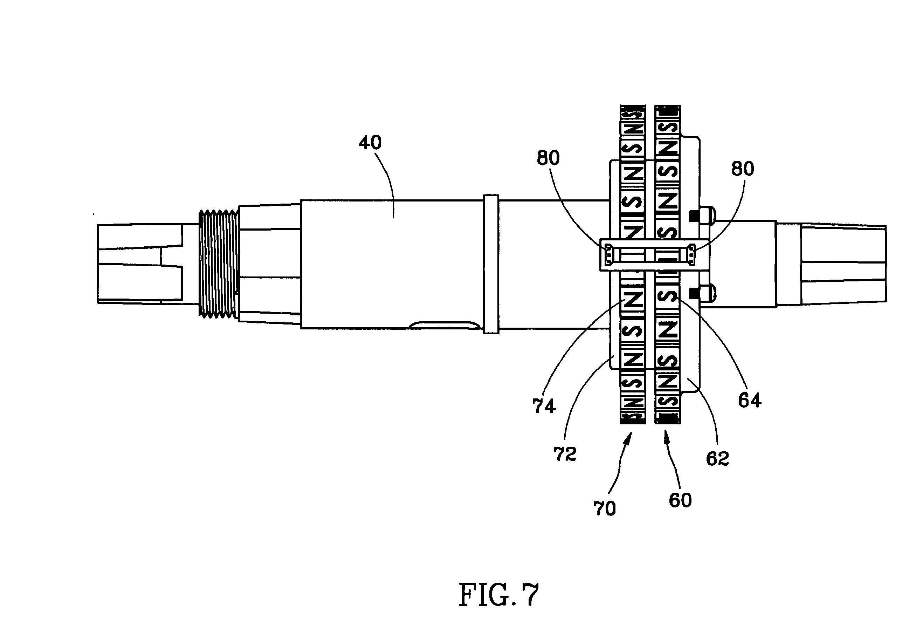

FIG. 7 is similar to FIG. 5, illustrating the magnets of the two magnetic devices in polar misalignment; and
FIG. 8 is similar to FIG. 6, illustrating the socket rotated backward with the drive ring.

### DETAILED DESCRIPTION OF THE INVENTION

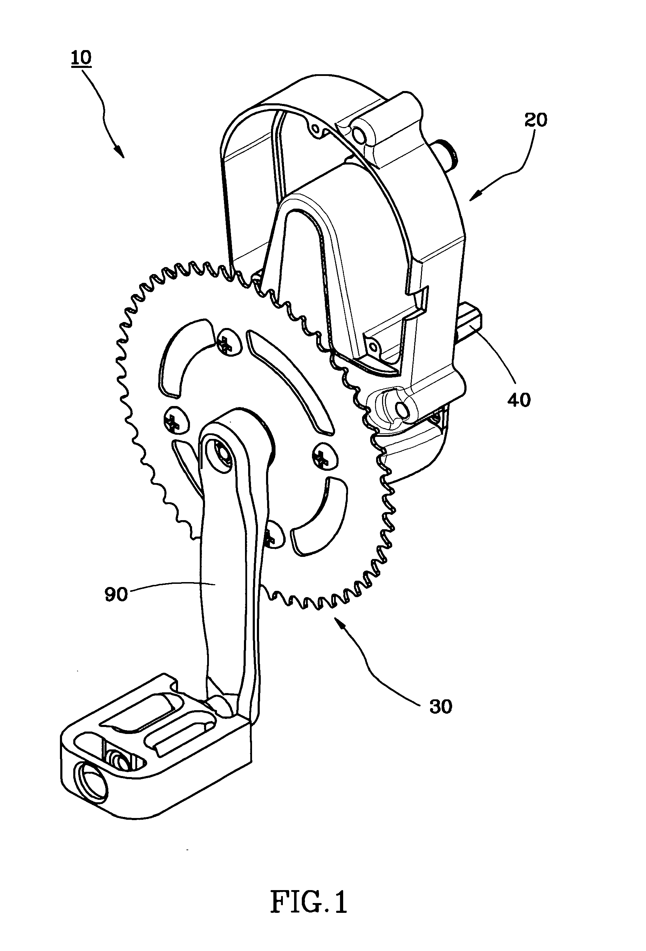

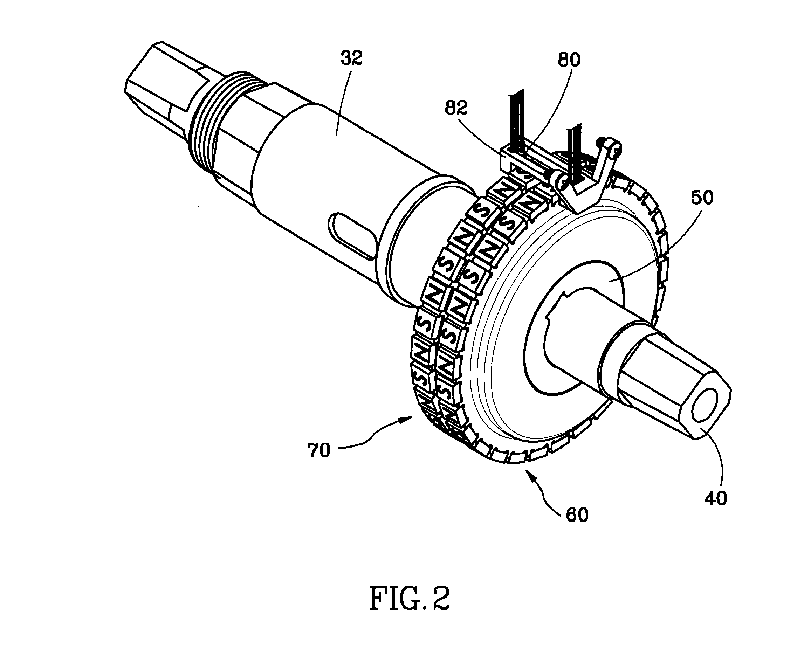

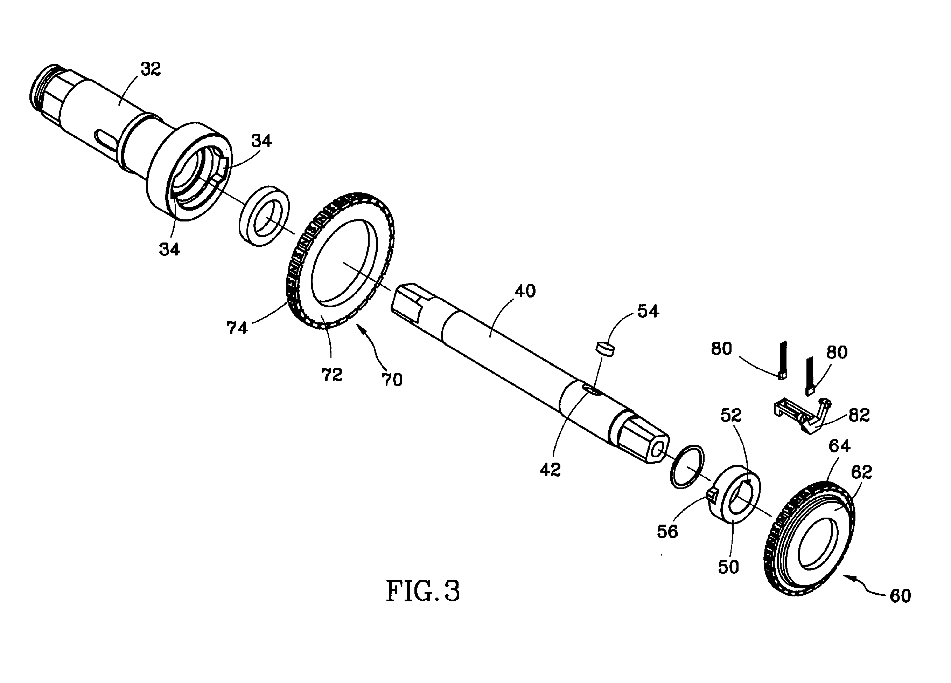

Referring to FIGS. 1-3, a reverse brake mechanism **10** in accordance with the present invention is shown for use in an electrically assisted bicycle. The reverse brake mechanism **10** comprises a motor **20,** a chainwheel **30,** a crankshaft **40,** a drive ring **50,** two magnetic devices **60** and **70,** and two magnetic sensors **80.**

The motor **20** is mounted at a frame of the electrically assisted bicycle to provide assisted power. Because the motor **20** is a well-known device, no further detailed description in this regard is necessary.

The chainwheel **30** comprises a socket **32** coupled to the motor **20** through a one-way coupling (not shown), enabling the chainwheel **30** to be rotated in one direction by the motor **20** to output the assisted power of the motor **20.** Further, the socket **32** has two opposite mounting grooves **34** in an inner perimeter thereof.

The crankshaft **40** is inserted through the socket **32** of the chainwheel **30,** having two opposite ends respectively extended out of the motor **20** and connected with one respective crank arm **90.** Thus, the crankshaft **40** can be driven by the two crank arms **90** to rotate forward or backward. Further, the crankshaft **40** has a first key slot **42** in an outer periphery thereof.

The drive ring **50** has a second key slot **52** in the inner perimeter thereof, and two opposite protruding blocks **56** at the outer perimeter thereof. Further, a key **54** is engaged in between the first key slot **42** of the crankshaft **40** and the second key slot **52** of the drive ring **50** to join the drive ring **50** and the crankshaft **40** together. The length of the protruding blocks **56** is smaller than the length of the mounting grooves **34.** Further, the protruding blocks **56** are respectively inserted into the mounting grooves **34** in the socket **32** of the chainwheel **30** so that the drive ring **50** can be driven by the crankshaft **40** to rotate the socket **32** of the chainwheel **30** forward or backward.

The two magnetic devices **60** and **70** each have a magnet holder **62** and **72,** and a plurality of magnets **64** and **74.** The magnet holders **62** and **72** are ring-shaped and respectively fixedly mounted around the socket **32** of the chainwheel **30** and the drive ring **50.** The magnets **64** and **74** are respectively fixedly mounted around the outer perimeters of the magnet holders **62** and **72.** Besides, the two adjacent magnets **64** of the magnetic devices **60** have reversed polarity, and the two adjacent magnets **74** of the magnetic devices **70** have reversed polarity, and further, the magnets **64** are respectively kept in alignment with the magnets **74** in a co-polarity manner.

The two magnetic sensors **80** are fixedly mounted in a sensor holder **82.** The sensor holder **82** is set between the two magnet holders **62** and **72.** Further, the two magnetic sensors **80** are electrically connected to the motor **20,** and respectively disposed to face toward the magnets **64** and **74** of the two magnetic devices **60** and **70** for sensing the respective magnetic field variations and controlling the output of the assisted power of the motor **20** subject to the detection results. Further, in this embodiment, the magnetic sensors **80** are Hall effect sensors.

After understanding of the structural details of the reverse brake mechanism **10,** the operation and features of the reverse brake mechanism **10** are outlined hereinafter.

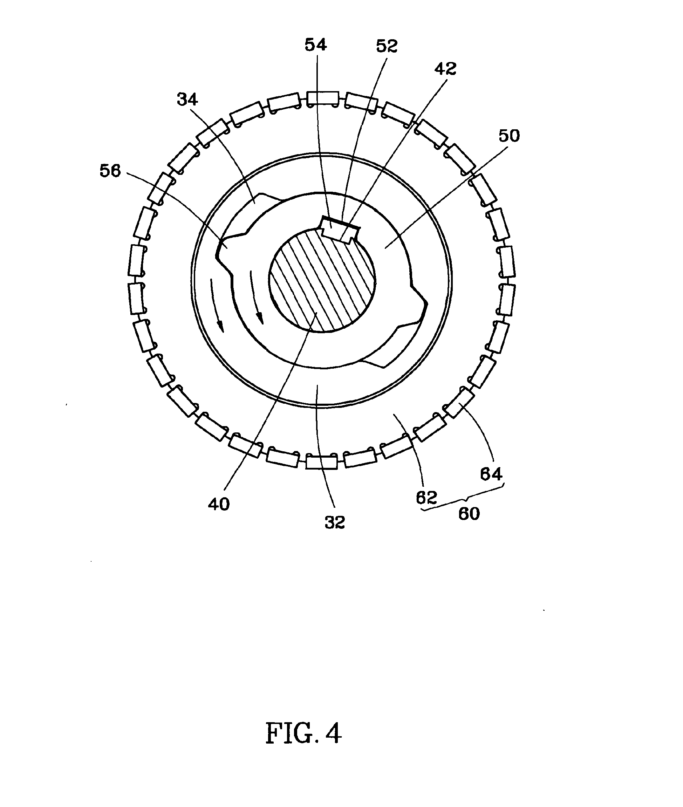

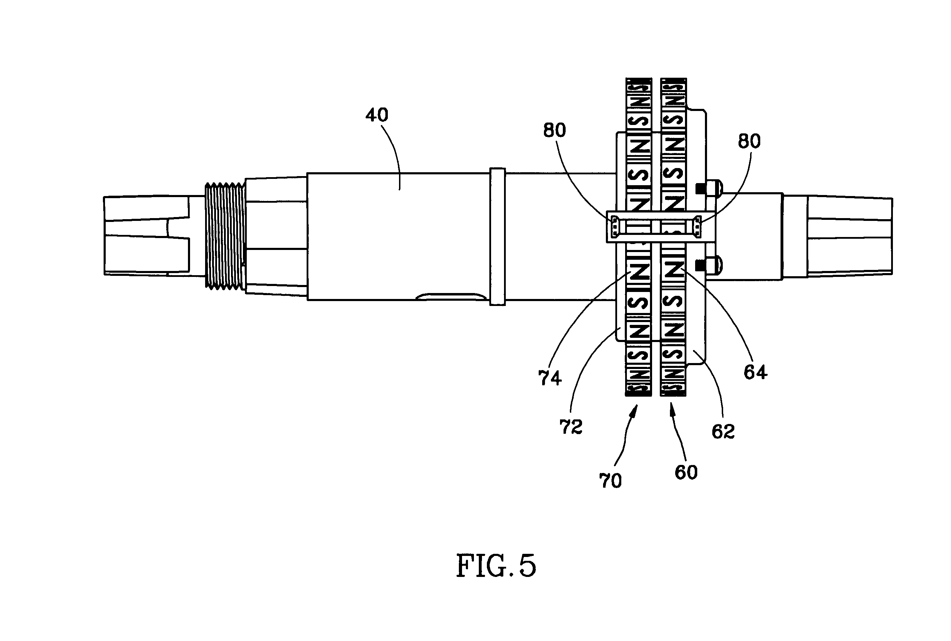

When a rider pedals the pedals to rotate the crankshaft **40** forward, the drive ring **50** is rotated with the crankshaft **40** forward. During the forward rotation of the drive ring **50,** the matching engagement between the protruding blocks **56** of the drive ring **50** and the mounting grooves **34** of the socket **32** of the chainwheel **30** causes the chainwheel **30** to be rotated forward, as shown in FIG. 4, and therefore a chain can be driven by the chainwheel **30** to rotate the rear wheel forward. Further, when the drive ring **50** drives the socket **32** to rotate forward, the two magnet holders **62** and **72** are rotated with the socket **32** and the drive ring **50** synchronously. At this time, the magnets **64** and **74** of the two magnetic devices **60** and **70** are maintained in the co-polarity manner, avoiding polar misalignment, as shown in FIG. 5, and therefore, the motor **20** keeps providing the assisted power to the socket **32** of the chainwheel **30.**

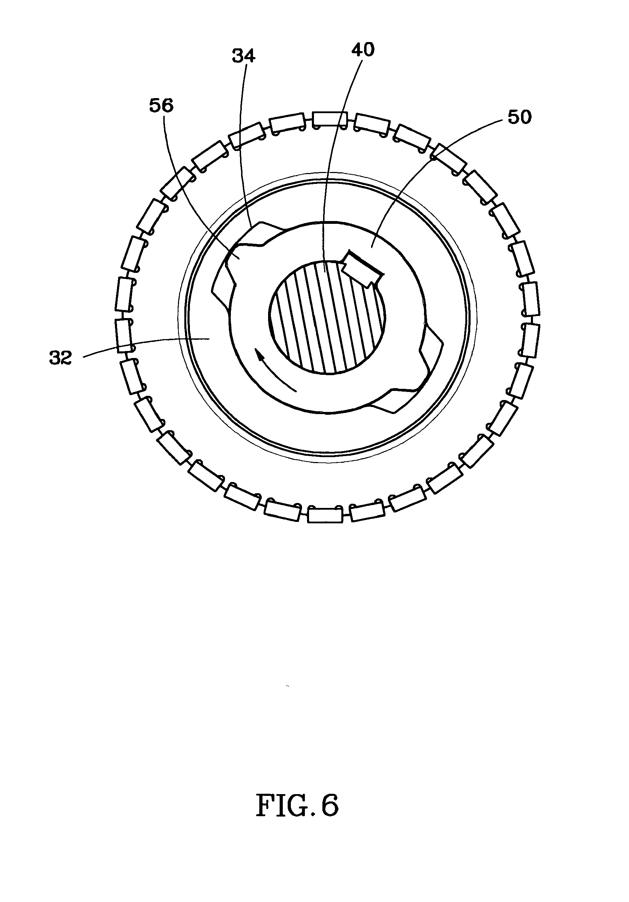

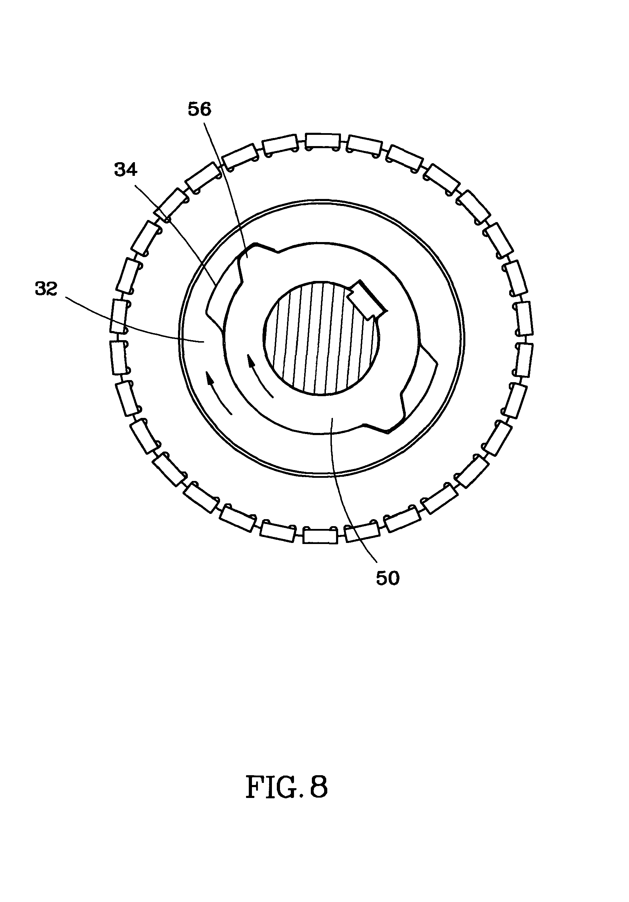

When the rider pedals the pedals in the reversed direction to rotate the crankshaft **40** backward, the drive ring **50** is rotated with the crankshaft **40** backward, as shown in FIG. 5. At this moment, the protruding blocks **56** of the drive ring **50** do not touch the mounting grooves **34** of the socket **32,** generating a time lag. In this time lag, the magnet holder **62** will be driven by the drive ring **50** to rotate relative to the other magnet holder **72,** causing polar misalignment between the magnets **64** at the magnet holder **62** and the magnets **74** at the magnet holder **72**, as shown in FIG. 6. At this time, the magnetic sensors **80** sense the variation of the magnetic field and then interrupt the output of the motor **20.** Thereafter, the protruding blocks **56** of the drive ring **50** touch the mounting grooves **34** of the socket **32,** and then drive the socket **32** and the chainwheel **30** to rotate backward, as shown in FIG. 8. Once the chainwheel **30** starts reversing, it can pull the chain to produce a braking effect.

In conclusion, the reverse brake mechanism **10** enables the crankshaft **40** to drive the electrically assisted bicycle forward during its forward rotation, and uses magnetic sensors **80** to sense polar misalignment between magnets **64** and **74** and to further interrupt the assisted power of the motor **20** during a backward rotation of the crankshaft **40** so that the crankshaft **40** can reverse the chainwheel **30** to produce a braking effect when it is rotated backward.

## Claims

1. A reverse brake mechanism (10) for electrically assisted bicycle, comprising:
a motor (20) for outputting an assisted power;
a chainwheel (30) comprising a socket (32) coupled to said motor (20) for rotation in one direction and rotatable by said motor (20) in a forward direction;
a crankshaft (40) rotatably inserted through said socket (32) of said chainwheel (30);
wherein the reverse brake mechanism is **characterized in that** the reverse brake mechanism further comprises:
a drive ring (50) fixedly mounted around said crankshaft (40) and coupled to said socket (32) of said chainwheel (30) in such a manner that when said crankshaft (40) is rotated forward, said drive ring (50) is driven by said crankshaft (40) to rotate said socket (32) and said chainwheel (30) forward; when said crankshaft (40) is rotated backward, said drive ring (50) is driven by said crankshaft (40) to rotate relative to said socket (32) and then to rotate said socket (32) and said chainwheel (30) backward after a predetermined time lag;
two magnetic devices (60) and (70) each comprising a magnet holder and a magnet, said two magnet holders being respectively fixedly mounted at said socket (32) of said chainwheel (30) and said drive ring (50), the magnet of each said magnetic device being fixedly mounted in the associating said magnet holder in such a manner that when said crankshaft (40) is rotated forward, said two magnet holders are synchronously driven by said socket (32) of said chainwheel (30) and said drive ring (50) to rotate forward; when said crankshaft (40) is rotated backward, one said magnet holder is driven by said drive ring (50) to rotate relative to the other said magnet holder in said predetermined time lag, causing a polar misalignment between the magnet of one said magnetic device and the magnet of the other said magnetic device; and
two magnetic sensors (80) electrically connected to said motor (20) and respectively facing toward the magnets of said two magnetic devices (60) and (70) for sensing the polar misalignment between the magnet of one said magnetic device and the magnet of the other said magnetic device and interrupting the output of the assisted power of said motor (20).

2. The reverse brake mechanism (10) for electrically assisted bicycle as claimed in claim 1, wherein said socket (32) of said chainwheel (30)defines a mounting groove in an inner perimeter thereof; said drive ring (50) comprises a protruding block located at an outer perimeter thereof and insertable into said mounting groove of said socket (32), the length of each said protruding block being smaller than the length of each said mounting groove.

3. The reverse brake mechanism (10) for electrically assisted bicycle as claimed in claim 1, wherein said crankshaft (40) defines a first key slot (42) in the periphery thereof; said drive ring (50) defines a second key slot (52) in an inner perimeter thereof; a key (54) is engaged in between said first key slot (42) and said second key slot (52) to join said crankshaft (40) and said drive ring (50) together.

4. The reverse brake mechanism (10) for electrically assisted bicycle as claimed in claim 1, wherein the magnets of said two magnetic devices (60) and (70) have the same magnetism.

5. The reverse brake mechanism (10) for electrically assisted bicycle as claimed in claim 1, wherein each said magnetic device comprises a plurality of magnets alternatively reversely arranged around the associating said magnet holder.

6. The reverse brake mechanism (10) for electrically assisted bicycle as claimed in claim 1, wherein said two magnetic sensors (80) are fixedly mounted in a sensor holder (82) set between said two magnetic holders of said two magnetic devices (60) and (70).

## Patentansprüche

1. Rücktrittsbremsen-Mechanismus (10) für ein elektrisch unterstütztes Fahrrad, welcher umfasst,
einen Motor (20) zur Ausgabe einer Hilfs-Leistung;
ein Kettenrad (30) mit einer Buchse (32), die zur Rotation in eine Richtung mit dem Motor (20) verbunden und durch den Motor (20) in einer Vorwärtsrichtung drehbar ist;
eine Kurbelwelle (40), die drehbar durch die Buchse (32) des Kettenrads (30) drehbar inseriert ist;
worin der Rücktrittsbremsen-Mechanismus **dadurch gekennzeichnet ist, dass** der Rücktrittbremsen-Mechanismus weiter umfasst:
einen Antriebsring (50), der um die Kurbelwelle (40) fest befestigt und mit der Buchse (32) des Kettenrads (30) derart gekoppelt ist, dass wenn die Kurbelwelle (40) vorwärts gedreht wird, der Antriebsring (50) durch die Kurbelwelle (40) angetrieben wird, um die Buchse (32) und das Kettenrad (30) vorwärts zu drehen, und dass wenn die Kurbelwelle (40) rückwärts gedreht wird, der Antriebsring (50) durch die Kurbelwelle (40) angetrieben wird, um sich relativ zur Buchse (32) zu drehen, und dann um die Buchse (32) und das Kettenrad (30) nach einer bestimmten Zeitverzögerung rückwärts zu drehen;
zwei magnetische Einrichtungen (60) und (70), die jeweils eine Magnethalterung und einen Magnet umfassen, worin die zwei Magnethalterungen jeweils fest an der Buchse (32) des Kettenrads (30) und dem Antriebsring (50) befestigt sind, worin der Magnet einer jeden magnetischen Einrichtung fest in der assoziierten Magnethalterung befestigt sind, so dass wenn die Kurbelwelle (40) nach vorne gedreht wird, die zwei Magnethalterungen durch die Buchse (32) des Kettenrads (30) und den Antriebsring (50) synchron angetrieben werden, um sich vorwärts zu drehen, und so dass wenn die Kurbelwelle (40) rückwärts gedreht wird, einer der Magnethalterungen durch den Antriebsring (50) angetrieben wird, um sich relativ zu der anderen Magnethalterung in der bestimmten Zeitverzögerung zu drehen, wodurch eine polare Falschausrichtung zwischen dem Magneten der einen magnetischen Einrichtung und dem Magneten der anderen magnetischen Einrichtung hervorgerufen wird; und
zwei magnetische Sensoren (80), die mit dem Motor (20) elektrisch verbunden und jeweils auf die Magneten der zwei magnetischen Einrichtungen (60) und (70) ausgerichtet sind, um die polare Falschausrichtung zwischen dem Magneten der einen magnetischen Einrichtung und dem Magneten der anderen magnetischen Einrichtung zu erfassen und die Ausgabe der unterstützenden Leistung des Motors (20) zu unterbrechen.

2. Rücktrittsbremsen-Mechanismus (10) für ein elektrisch unterstütztes Fahrrad nach Anspruch 1, worin die Buchse (32) des Kettenrads (30) eine Befestigungsvertiefung in einem inneren Umfang davon definiert, worin der Antriebsring (50) einen vorstehenden Block umfasst, der an einem äußeren Umfang davon angeordnet ist und in die Befestigungsvertiefung der Buchse (32) inseriert werden kann, worin die Länge eines jeden vorstehenden Blocks kleiner ist als die Länge einer jeden Befestigungsvertiefung.

3. Rücktrittsbremsen-Mechanismus (10) für ein elektrisch unterstütztes Fahrrad nach Anspruch 1, worin die Kurbelwelle (40) einen ersten Schlüsselschlitz (42) in dem Umfang davon definiert, worin der Antriebsring (50) einen zweiten Schlüsselschlitz (52) in einem inneren Umfang davon definiert, worin ein Schlüssel (54) zwischen dem ersten Schlüsselschlitz (42) und dem zweiten Schlüsselschlitz (52) im Eingriff steht, um die Kurbelwelle (40) und den Antriebsring (50) miteinander zu verbinden.

4. Rücktrittsbremsen-Mechanismus (10) für ein elektrisch unterstütztes Fahrrad nach Anspruch 1, worin die Magnete der zwei magnetischen Einrichtungen (60) und (70) den gleichen Magnetismus aufweisen.

5. Rücktrittsbremsen-Mechanismus (10) für ein elektrisch unterstütztes Fahrrad nach Anspruch 1, worin jede magnetische Einrichtung mehrere Magnete umfasst, die alternativ umgekehrt um die assoziierte Magnethalterung angeordnet sind.

6. Rücktrittsbremsen-Mechanismus (10) für ein elektrisch unterstütztes Fahrrad nach Anspruch 1, worin die zwei Magnetsensoren (80) fest in einer Sensorhalterung (82) befestigt sind, die zwischen zwei Magnethalterungen der zwei magnetischen Einrichtungen (60) und (70) angeordnet sind.

## Revendications

1. Mécanisme de frein inverse (10) destiné à une bicyclette à assistance électrique, comprenant :
un moteur (20) destiné à produire une puissance d'assistance ;
un plateau de pédalier (30) comprenant une douille (32) couplée audit moteur (20) pour rotation dans une direction et pouvant tourner au moyen dudit moteur (20) dans une direction vers l'avant ;
un vilebrequin (40) inséré de manière rotative à travers ladite douille (32) dudit plateau de pédalier (30) ;
le mécanisme de frein inverse étant **caractérisé en ce que** le mécanisme de frein inverse comprend en outre :
une bague d'entraînement (50) montée fixement autour dudit vilebrequin (40) et couplée à ladite douille (32) dudit plateau de pédalier (30) d'une manière telle que, lorsque ledit vilebrequin (40) est mis en rotation vers l'avant, ladite bague d'entraînement (50) est entraînée par ledit vilebrequin (40) pour faire tourner ladite douille (32) et ledit plateau de pédalier (30) vers l'avant ; lorsque ledit vilebrequin (40) est mis en rotation vers l'arrière, ladite bague d'entraînement (50) est entraînée par ledit vilebrequin (40) pour tourner par rapport à ladite douille (32), puis pour faire tourner ladite douille (32) et ledit plateau de pédalier (30) vers l'arrière après un délai prédéfini ;
deux dispositifs magnétiques (60) et (70) comprenant chacun un support d'aimant et un aimant, lesdits deux supports d'aimant étant respectivement montés fixement à ladite douille (32) dudit plateau de pédalier (30) et à ladite bague d'entraînement (50), l'aimant de chaque dispositif magnétique précité étant monté fixement dans ledit support d'aimant de l'association d'une manière telle que, lorsque ledit vilebrequin (40) est mis en rotation vers l'avant, lesdits deux supports d'aimant sont entraînés de façon synchrone par ladite douille (32) dudit plateau de pédalier (30) et de ladite bague d'entraînement (50) pour tourner vers l'avant ; lorsque ledit vilebrequin (40) est mis en rotation vers l'arrière, un support d'aimant précité est entraîné par ladite bague d'entraînement (50) pour tourner par rapport à l'autre support d'aimant précité dans ledit délai prédéfini, provoquant un désalignement polaire entre l'aimant d'un dispositif magnétique précité et l'aimant de l'autre dispositif magnétique précité ; et
deux capteurs magnétiques (80) connectés électriquement audit moteur (20) et faisant respectivement face aux aimants des deux dispositifs magnétiques précités (60) et (70) pour détecter le désalignement polaire entre l'aimant d'un dispositif magnétique précité et l'aimant de l'autre dispositif magnétique précité et interrompre la production de la puissance d'assistance dudit moteur (20).

2. Mécanisme de frein inverse (10) destiné à une bicyclette à assistance électrique selon la revendication 1, dans lequel ladite douille (32) dudit plateau de pédalier (30) définit une rainure de montage dans un périmètre interne de celui-ci ; ladite bague d'entraînement (50) comprend un bloc faisant saillie situé au niveau d'un périmètre externe de celle-ci et pouvant être inséré dans ladite rainure de montage de ladite douille (32), la longueur de chaque bloc faisant saillie précité étant plus petite que la longueur de chaque rainure de montage précitée.

3. Mécanisme de frein inverse (10) destiné à une bicyclette à assistance électrique selon la revendication 1, dans lequel ledit vilebrequin (40) définit un premier logement de clavette (42) dans la périphérie de celui-ci ; ladite bague d'entraînement (50) définit un second logement de clavette (52) dans un périmètre interne de celle-ci ; une clavette (54) est amenée en prise entre ledit premier logement de clavette (42) et ledit second logement de clavette (52) pour joindre ledit vilebrequin (40) et ladite bague d'entraînement (50) l'un à l'autre.

4. Mécanisme de frein inverse (10) destiné à une bicyclette à assistance électrique selon la revendication 1, dans lequel les aimants des deux dispositifs magnétiques précités (60) et (70) possèdent le même magnétisme.

5. Mécanisme de frein inverse (10) destiné à une bicyclette à assistance électrique selon la revendication 1, dans lequel chaque dispositif magnétique précité comprend une pluralité d'aimants disposés inversement en alternance autour dudit support d'aimant de l'association.

6. Mécanisme de frein inverse (10) destiné à une bicyclette à assistance électrique selon la revendication 1, dans lequel lesdits deux capteurs magnétiques (80) sont montés fixement dans un support de capteur (82) installé entre lesdits deux supports magnétiques desdits deux dispositifs magnétiques (60) et (70).
